# EUROPÄISCHE PATENTSCHRIFT

(11) **EP 0 344 511 B1**
(45) Veröffentlichungstag und Bekanntmachung des Hinweises auf die Patenterteilung: **07.07.1993**
(21) Anmeldenummer: 89108760.3
(22) Anmeldetag: 16.05.1989
(51) Int. Cl.: F16D 13/64, F16D 25/063

(54) **Lamellenreibkupplung**
Friction clutch with multiple lamellae
Embrayage à friction à lamelles

(30) Priorität: 28.05.1988 DE 3818239
(43) Veröffentlichungstag der Anmeldung: 06.12.1989
(73) Patentinhaber: MTU MOTOREN- UND TURBINEN-UNION FRIEDRICHSHAFEN GMBH, D-88040 Friedrichshafen (DE)
(72) Erfinder: Gaggermeier, Helmut, Dr., D-7990 Friedrichshafen 1 (DE)

(56) Entgegenhaltungen:
- DE-C- 705 117
- DE-C- 740 464
- FR-A- 348 386
- FR-A- 2 154 056
- GB-A- 152 528

## Beschreibung

Die Erfindung betrifft eine Lamellenreibkupplung nach dem Oberbegriff des Anspruchs 1, wie sie beispielsweise aus der DE-C-26 01 507 als bekannt hervorgeht.

Bei der in der eingangs genannten Schrift aufgezeigten Lamellenreibkupplung sind die in Nuten eines Außenkörpers und eines Nabenkörpers der Kupplung eingreifenden Verzahnungen von Außen- und Innenlamellen V-förmig, mit sich zum Zahnkopf verjüngenden Zähnen ausgebildet. Aus Toleranzgründen, und weil bei Betätigung der Kupplung die axiale Verlagerung der Lamellen bei kleinem Verschiebungswiderstand erfolgen soll, muß ein ausreichendes radiales Spiel der Lamellen vorgesehen sein, das die axiale Verschieblichkeit der Lamellen auch bei auftretenden starken Temperaturschwankungen und kleinen Schrägstellungen gewährleistet. In gelöstem Zustand der Kupplung, wenn also Außen- und Innenlamellen axial auf Abstand zueinander liegen, wird ein unkontrolliertes Taumeln der Lamellen beobachtet. Dies liegt daran, daß infolge einer im Schwerpunkt wirkenden Kraft und infolge des Spalts zwischen Lamelle und ihrer Führung bei instabiler Abstützung einzelne Außenlamellen in Schieflage geraten, und gegen die entgegengesetzt umlaufenden Innenlamellen anstoßen. Um eine saubere Trennung der Lamellen bei gelöster Kupplung zu erreichen, wurde bereits vorgeschlagen Abstandselemente zwischen den Lamellen vorzusehen, die die Lamellen auseinanderhalten. Dennoch läßt sich auch mit dieser Vorkehrung die gewünschte parallele Lage der Lamellen nicht immer einstellen.

Die Kupplung nach der FR-A-348 386 ist mit konisch gewölbten Lamellen ausgebildet. Beim Schließen der Kupplung werden die Lamellen aneinandergepreßt, wobei sie sich abflachen. Die damit einhergehende radiale Ausdehnung erfordert auf dem Umfang der Lamellen genügend Freiraum. Wird die Kupplung gelöst, federn die Lamellen zurück, bis sie an allen Zahnflanken spielfrei im Außenkörper anliegen. Eine Schiefstellung der Lamellen bei gelöster Kupplung und umlaufendem Außenkörper wird also durch axiale Elastizität der Lamellen verhindert, wobei die Zahnflanken radial gerichtet sind, so daß sich die Spalte zum Außenkörper bei Zurückfedern der Lamellen verkleinern.

In der DE-C-705 117 ist eine Kupplungslamelle mit hinterschnittenen Zähnen dargestellt. Es soll eine gleichmäßige Beanspruchung aller Zähne erreicht werden, dadurch, daß bei Erwärmung der Lamellen eine selbsttätige Zentrierung erfolgt. Es ist jedoch nicht aufgezeigt, wie die Nuten im aufnehmenden Außenkörper und damit das Spiel zwischen Außenumfang der Lamelle und Außenkörper gestaltet ist.

Der Erfindung liegt die Aufgabe zugrunde, das Lamellentaumeln zu verhindern.

Diese Aufgabe wird bei einer gattungsgemäßen Einrichtung durch die kennzeichnenden Merkmale des Anspruchs 1 gelöst. Aufgrund von Unsymmetrien wirken an den umlaufenden Außenlamellen im Schwerpunkt angreifende, resultierende Fliehkräfte. Wegen des notwendigen Spalts zwischen den Außenlamellen und ihrer Führung im Außenkörper verrutschen die Außenlamellen bei gelöster Kupplung unter der Einwirkung dieser Kräfte in eine etwas exzentrische Lage, in der sie in ihrer Führung abgestützt werden. Dabei würden die Außenlamellen bei instabiler Abstützung, wie beim Stand der Technik gegeben, kippen und dadurch in eine unerwünschte Schiefstellung geraten. Eine instabile Abstützung liegt vor, wenn die Stützpunkte an den Lamellen in Kraft- bzw. Verschieberichtung gesehen hinter dem Kraftangriffspunkt bzw. dem Schwerpunkt liegen. Eine leichte Schrägstellung bewirkt bei instabiler Abstützung ein Kippmoment, das die Schrägstellung verstärkt. Bei Ausführung der Zähne der Außenlamelle mit hinterschnittenen Zahnflanken nach der Erfindung wird eine stabile "hängende" Abstützung der Außenlamelle erzielt. Bei Schrägstellung von Lamellen tritt ein rückstellendes Moment auf, das die Schrägstellung rückgängig macht. Die Abstützung der Außenlamellen erfolgt an Zahnflanken von Zähnen, die in Kraftrichtung gesehen vor dem Schwerpunkt der Lamellen liegen. Dies liegt daran, daß zur Kraft- bzw. Verschieberichtung normal liegende Zahnflanken aus geometrischen Gründen früher zur Anlage in der Führung am Außenkörper gelangen, als schräg dazu liegende Zahnflanken oder andere Kanten des Umrisses der Außenlamellen und zur stabilen Abstützung geeignete Zahnflanken mit zur Kraftrichtung normaler Ausrichtung nur an Zähnen mit hinterschnittenen Zahnflanken vorgefunden werden. Um zu gewährleisten, daß die Außenlamellen an den Zahnflanken und nicht an anderen normal zur Kraftrichtung liegenden Stellen des Umrisses, beispielsweise Flächen des Zahnkopfes und Zahnfußes, in der Führung zur Anlage kommen, ist die Außenkontur der Außenlamellen derart auszubilden, daß der Spalt zwischen Außenlamellen und Außenkörper bei zentrischer Lage der Außenlamellen an den Zahnflanken am kleinsten ist. Durch Ausbildung der Verzahnung der Außenlamellen mit hinterschnittenen Zahnflanken und entsprechender Ausbildung der Aufnahmenuten mit Hinterschneidungen wird also das Schiefstellen der Außenlamellen verhindert. Bei Geradstellung der Außenlamellen wird aber ein Anstoßen der Innenlamellen und eine daraus resultierende Kreiselbewegung der Innenlamellen mit dadurch hervorgerufenem Taumeln der umlaufenden Innenlamellen vermieden.

Ein Ausführungsbeispiel der Erfindung ist in den Zeichnungen dargestellt und wird im folgenden näher beschrieben; es zeigen:
- Fig. 1: einen Längsschnitt durch eine Lamellenreibkupplung,
- Fig. 2: eine Querschnittsansicht der Lamellenreibkupplung entlang der in Fig. 1 eingezeichneten Schnittlinie II-II.

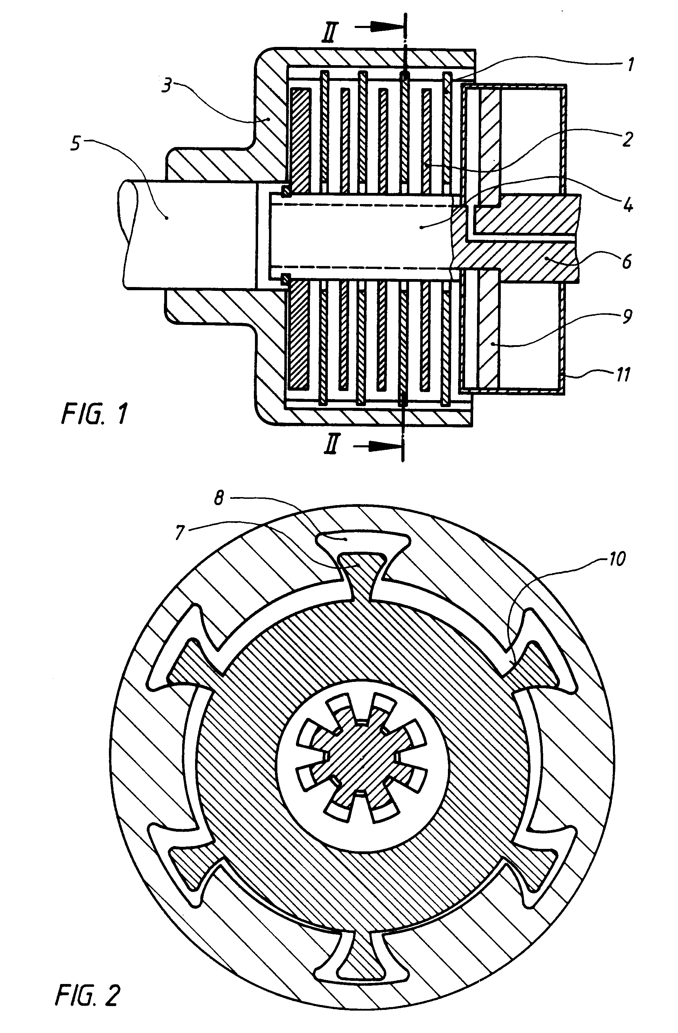

Bei der in Figur 1 im Längsschnitt dargestellten Lamellenreibkupplung sind die Außenlamellen 1 durch eine Verzahnung mit einem Außenkörper 3 gekoppelt, der mit einer Welle 5 verbunden ist. Die Innenlamellen 2 sind über eine Verzahnung mit einem Nabenkörper 4 gekoppelt, welcher mit einer Welle 6 verbunden ist. Zur Betätigung der Kupplung dient hier ein Druckring 9 mit Hydraulikzylinder 11. Bei gelöster Kupplung gehen die axial verschieblichen Lamellen auf gleiche Abstände. Zum Trennen der Lamellen dienen beispielsweise zwischen den Lamellen liegende, nicht dargestellte, elastische Abstandselemente. In Figur 2, die eine Schnittansicht der Lamellenreibkupplung entlang der in Figur 1 eingezeichneten Schnittlinie II-II darstellt, ist eine Außenlamelle 1 dargestellt. Die Außenlamelle 1 besitzt Zähne 7 mit hinterschnittenen, gekrümmten Zahnflanken 10. Die Zähne 7, die auch gerade Zahnflanken 10 aufweisen können, greifen in Nuten 8 mit entsprechenden Hinterschneidungen im Außenkörper 3 ein.

Die in Figur 2 dargestellte Außenlamelle 1 ist in einer Lage gezeichnet, in der sie sich infolge einer im Schwerpunkt angreifenden Kraft, befinden würde. Infolge der Kraft hängt die Außenlamelle 1 an den hinterschnittenen Zahnflanken 10 von Zähnen 7, die in Kraftrichtung gesehen vor dem Schwerpunkt, dem Kraftangriffspunkt, liegen. Das durch Spalte dargestellte Spiel zwischen Außenlamelle 1 und der Führung in der Nut 8 im Außenkörper 3 ist übertrieben gezeichnet, um einen besseren Eindruck von der Verrutschung der Außenlamelle 1 infolge der wirkenden Kräfte zu vermitteln. Wegen der hängenden Abstützung der Außenlamelle 1 ist gewährleistet, daß sich die Außenlamelle 1 in einer geraden Lage einstellt. Aus geometrischen Gründen gelangen normal zur Kraft- bzw. Verschieberichtung liegende Flankenbereiche der Außenlamelle 1 früher in Anlage an die Führung im Außenkörper 3, als schräg verlaufende Flankenbereiche. Bei hinterschnittenen Zähnen 7 befinden sich als Abstützung geeignete normal liegende Zahnflanken 10 in Kraftrichtung gesehen vor dem Schwerpunkt, dem Mittelpunkt der Lamellen, so daß es zur dargestellten stabilen "hängenden" Abstützung kommt, bei der Schrägstellungen durch die Wirkung der im Schwerpunkt angreifenden Kraft selbsttätig durch ein rückstellendes Moment beseitigt werden. Allerdings muß gewährleistet sein, daß der Spalt zwischen Außenlamelle 1 und Außenkörper 3 bei zentrischer Lage der Außenlamelle 1 an den Zahnflanken 10 kleiner ausgebildet ist, als an den anderen Stellen der Umrißkontur der Außenlamelle 1. Dadurch wird vermieden, daß die Außenlamellen beispielsweise an ebenfalls normal zur Verschieberichtung liegenden Flächen des Zahnkopfes und Zahnfußes in Anlage an der Führung gelangen können. Ein Kippen und damit ein Schiefstellen der Außenlamelle 1 könnte nur dann eintreten, wenn die Abstützungen der Außenlamellen in Kraftrichtung hinter dem Schwerpunkt liegen würden. Da dies ausgeschlossen ist, und somit gewährleistet ist, daß die Außenlamellen 1 nicht in Schieflage geraten können, ist auch gewährleistet, daß die Außenlamellen 1 die Innenlamellen 2 nicht anstoßen und dadurch in eine Kreiselbewegung versetzen, wodurch die Innenlamellen 2 in eine taumelnde Bewegung geraten.

Eine noch stabilere Abstützung der Außenlamellen wird erzielt, wenn die Außenlamellen 1 im Bereich des Zahnkranzes gegenüber dem Lamellenkörper zusätzlich verbreitert sind. Die Abstützbasis wird dadurch verbreitert. Durch Zuordnung der Zähne nur zu jeder zweiten Aufnahmenut im Außenkörper 3 und um einen Zahn versetzter Anordnung aufeinanderfolgender Außenlamellen 1 kann eine besonders breite Verzahnung ausgeführt werden. Die Verzahnungsbreite kann dadurch doppelt so groß als bisher werden.

## Patentansprüche

1. Lamellenreibkupplung mit einem Außenkörper (3) mit Nuten (8) zur Führung der Außenlamellen mit ihrer Verzahnung sowie mit einem Nabenkörper (4) mit Nuten zur Führung der Innenlamellen (2) mit ihrer Verzahnung, wobei Außen- und Innenlamellen mit Spiel in ihren Führungen anliegen, dadurch gekennzeichnet, daß die Zähne (7) der Außenlamellen (1) mit hinterschnittenen Zahnflanken (10) ausgeführt sind, daß die Nuten (8) im Außenkörper (3) entsprechende Hinterschneidungen aufweisen und daß die Außenlamellen derart ausgebildet sind, daß bei zentrischer Anordnung der Außenlamellen (1) im Außenkörper (3) der durch das Spiel bedingte Spalt zwischen Außenlamellen (1) und dem Außenkörper (3) an den Zahnflanken (10) kleiner ist, als an den anderen Stellen der Außenkontur der Außenlamellen (1), und daß die Hinterschneidungen so ausgebildet sind, daß bei gelöster Kupplung infolge einer im Schwerpunkt der Außenlamelle (1) angreifenden, radial gerichteten Kraft die Außenlamelle (1) in den Nuten des Außenkörpers (3) mit den Zahnflanken (10) von denjenigen Zähnen (7) hängt, die in Richtung der Kraft gesehen vor deren Angriffspunkt im Schwerpunkt der Außenlamelle (1) liegen.

2. Lamellenreibkupplung nach Anspruch 1, dadurch gekennzeichnet, daß die Zähne (7) der Außenlamellen (1) mit größerer Wandstärke ausgeführt sind, als der übrige Lamellenkörper.

## Claims

1. A multiple disc clutch having an outer body (3) with grooves (8) for guiding the outer discs with their teeth, and also with a hub body (4) with grooves for guiding the inner discs (2) with their teeth, wherein outer and inner discs are fitted with clearance in their guides, characterised in that the teeth (7) of the outer discs (1) are formed with undercut tooth flanks (10), in that the grooves (8) in the outer body (3) have corresponding undercut portions, and in that the outer discs are so formed that with a central arrangement of the outer discs (1) in the outer body (3) the gap between the outer discs (1) and the outer body (3) resulting from the clearance is smaller at the tooth flanks (10) than at the other locations of the outer contour of the outer discs (1), and in that the undercut portions are so formed that when the clutch is disengaged, as a result of a radially directed force acting at the centre of gravity of the outer disc (1), the outer disc (1) is suspended in the grooves of the outer body (3) with the tooth flanks (10) of those teeth (7) which, viewed in the direction of the force, are situated in front of the point of application at the centre of gravity of the outer disc (1).

2. A multiple disc clutch according to Claim 1, characterised in that the teeth (7) of the outer discs (1) are formed with a greater wall thickness than the rest of the disc body.

## Revendications

1. Embrayage à disques et à friction, comprenant un corps extérieur (3) muni de gorges (8) pour guider les disques extérieurs par leur denture, ainsi qu'un corps de moyeu (4) pourvu de gorges pour guider les disques intérieurs (2) par leur denture, les disques extérieurs et intérieurs étant en contact avec jeu dans leurs guidages, caractérisé par le fait que les dents (7) des disques extérieurs (1) sont réalisées dotées de flancs (10) contre-dépouillés ; par le fait que les gorges (8) ménagées dans le corps extérieur (3) présentent des contre-dépouilles correspondantes, les disques extérieurs étant réalisés de telle sorte que, lorsque ces disques extérieurs (1) sont agencés centralement dans le corps extérieur (3), l'interstice entre les disques extérieurs (1) et le corps extérieur (3), provoqué par le jeu, soit plus petit sur les flancs (10) des dents que dans les autres zones de la configuration externe des disques extérieurs (1) ; et par le fait que les contre-dépouilles sont réalisées de façon que, lorsque l'embrayage est neutralisé, une force dirigée radialement, agissant au centre de gravité du disque extérieur (1), ait pour effet de faire flotter le disque extérieur (1) dans les gorges du corps extérieur (3), par les flancs (10) des dents (7) qui se trouvent, considérées dans la direction de la force, avant le point d'application de cette dernière au centre de gravité du disque extérieur (1).

2. Embrayage à disques et à friction, selon la revendication 1, caractérisé par le fait que les dents (7) des disques extérieurs (1) sont réalisées pourvues d'une plus grande épaisseur de paroi que le reste du corps de disque.
